# EUROPEAN PATENT SPECIFICATION

(11) **EP 0 401 152 B1**
(45) Date of publication and mention of the grant of the patent: **17.01.1996**
(21) Application number: 90630111.4
(22) Date of filing: 30.05.1990
(51) Int. Cl.: F02C 9/28, F04D 27/02

(54) **Acceleration control for a gas turbine engine with duct pressure loss compensation**
Beschleunigungsregelung für ein Gasturbinenflugtriebwerk mit Ausgleich der Druckverluste in den Strömungskanälen
Contrôle d'accélération d'un réacteur d'avion avec compensation de perte de pression dans les canalisations

(30) Priority: 30.05.1989 US 359186; 30.05.1989 US 359451
(43) Date of publication of application: 05.12.1990
(73) Proprietor: UNITED TECHNOLOGIES CORPORATION, Hartford, CT 06101 (US)
(72) Inventor: Smith, Jesse Walter, Stuart, Florida 34997 (US)
(74) Representative: Waxweiler, Jean

(56) References cited:
- EP-A- 0 306 064
- US-A- 4 117 668

## Description

This invention relates to gas turbine engines for powering aircraft and more particularly to that portion of the control system designed to control the engine's operation during acceleration which may further include means to compensate for variations in the fan operating line when scheduling fuel flow for acceleration.

As is well-known, gas turbine engines that utilize axial flow compressors are subject to stall and surge. Stall may occur in the compressor when the angle of attack and other conditions are such that the boundary layer of the air adjacent to the compressor blades separates inducing a pressure pulsation. If the pulsation does not subside and is allowed to propagate to other blades, the entire compressor will surge which could lead to an engine malfunction. The industry has attempted to eliminate surge or provide means for insuring that surge will not ensue, and if so, in situ, a remedy is designed to obviate the condition.

US-A-4 117 668 discloses a stall detector for gas turbine engine. Stall is detected by monitoring the acceleration schedule of the engine's fuel control and an engine operating parameter, either compressor speed, compressor pressure and computing signals indicative of when both the fuel control is on or near the acceleration schedule and when (1) the compressor speed is decaying at a given rate or (2) compressor discharge or burner pressure is decaying at a given rate or (3) the pressure ratio of low compressor discharge pressure to compressor inlet pressure or burner pressure to compressor inlet pressure is at a predetermined low level, an output signal is manifested.

Historically, fuel controls are designed to provide an open loop schedule that has sufficient surge margin to assure that the engine can be accelerated without incurring surge. The accepted philosophy for such schedules is to provide sufficient margin between the engine operating line and the surge line at the worst operating condition so that no matter what engine condition is encountered, surge will be avoided. The margin provided using this philisophy is a compromise between the rate of acceleration which could be achieved under the safest operating conditions and the surge margin required for the worst operating condition. Since acceleration time is always sacrificed in favor of avoiding surge, accelerations are not as rapid as desired or possible when operating at conditions other than the worst possible combination. Of course, it is ideal to accelerate the engine as rapidly as possible, so that in this scenario any means that will assure avoidance of surge while allowing rapid acceleration at all operating conditions is a desirable objective in this art.

Since the surge margin required for acceleration is normally dictated by the most severe operation, the engine may encounter (even though that situation hardly arises, if ever ), it is quite apparent that the engine operation can be enhanced at most operating conditions merely by ignoring the worse case scenario. Obviously, such is an unaccceptable solution to the problem, since surge must be avoided at all operating conditions to assure flight safety.

As is well-known, fuel controls such as the JFC-12, JFC-60 and JFC-68 manufactured by the Hamilton Standard Division of United Technologies Corporation, the assignee of this patent application, provide open loop schedules with sufficient stall margins for avoidance of stall in all contemplated operations of the engines. For details of acceleration controls, reference should be made to the aforementioned control models.

Such control systems manifest a control parameter that is indicative of Wƒ/P_{B} (where Wƒ is fuel flow rate in pounds per hour and P_{B} is burner pressure in pounds per square foot absolute). This parameter varies as a function of compressor speed (either the low compressor N₁ or the high compressor N₂) in a twin spool engine and other engine parameters selected to correct the speed to a baseline value and is multiplied by actual burner pressure (P_{B}) or its equivalent to schedule the proper fuel flow to the engine for engine acceleration.

Other engine control schemes may utilize a Ṅ₁ or Ṅ₂ (rate of change signal) to provide the same function as the Wƒ/P_{B} parameter. But, in either instance or by a combination of the two, the stall margin is excessive and/ or inherently provides slow accelerations when not operating under worst case conditions. Such inadequacies of these systems are acerbated even further when engine operations deviate from the norm due to power extraction, compressor bleed and engine efficiency degradation.

It has been found that one can provide a control scheme that assures the optimum acceleration (most rapid) without risk of compressor stall with any combination of bleed, power extraction and engine condition. This invention contemplates a closed loop system which provides an acceleration control which generates a simulated compressor stall limit signal which is converted to a desired burner pressure limit. This limit is calculated by selecting a desired engine pressure ratio as a function of corrected high pressure compressor rotor speed and closing the loop on actual burner pressure to control fuel flow to the burner. The error between the actual burner pressure signal and simulated compressor stall limit signal determines the rate of fuel flow during acceleration, properly accounting for compressor bleed, power extraction and degradation of engine efficiency.

The desired engine pressure ratio may be a limiting ratio of burner pressure and another engine pressure. Such a control mode relies on the use of a function generator which utilizes a ratio of burner pressure and other engine pressure to simulate high pressure compressor pressure ratio. There are numerous engine stations where the measured pressure correlates well with high compressor inlet pressure. Those locations include, but are not limited to, total and static pressure measurements at any point along the fan bypass duct, augmentor inlet pressures, and pressures at the fan discharge. As pressures near the aft end of the fan bypass duct are used to simulate compressor inlet pressure, duct losses in the fan duct have an influence on the correlation between sensed pressure and the simulated compressor inlet pressure. The impact of fan duct losses on the correlation between compressor pressure ratio and the selected control variable is greatest when the ratio of burner pressure and augmentor inlet pressure (P6) is used to simulate high compressor pressure ratio. When using this variable (P_{B}/P₆) as a control parameter, changes in duct loss due to fan operating line variations can alter the correlation between this parameter and pressure ratio across the high pressure compressor. When using the ratio of burner pressure and other engine pressures forward of the augmentor inlet as a control parameter, the impact of variations in fan op-line on duct pressure losses and the subsequent impact on the correlation between compressor pressure ratio and the selected control parameter is less, but still impacts the correlation. Since the previously described acceleration control serves to schedule the limiting pressure ratio for the high pressure compressor, it is necessary to assure that the selected control parameter (P_{B}/P₆, for insatnce) is a valid indication of the high compressor pressure ratio.

It has been found that a suitable compensation can be made for variations in duct pressure loss caused by fan operating line variations when using the ratio of burner pressure and other sensed engine pressures to simulate high pressure compressor pressure ratio. This compensation can be manifested by utilizing a logic circuit that uses corrected low pressure compressor speed (N1C2)and engine pressure ratio (EPR) as an indication of fan operating point and compares this to a baseline correlation to assess variations in operating EPR relative to a nominal fan operating line. (Hence the EPR variation (Δ EPR) is correlated with changes in duct pressure loss to compensate for fan op-line variations). This logic assures that the pressure ratio limit being calculated (P_{B}/P₆, for instance) will accurately reflect the high pressure compressor pressure ratio.

The object of this invention is to provide an improved acceleration mode for a gas turbine power plant that provides adequate stall margin independent of compressor bleed, power extraction, and degradation of engine efficiency.

This object is achieved according to the invention by an acceleration control for a gas turbine engine as claimed in claim 1. Advantageous embodiments of the invention are claimed in the dependent claims.

According to one aspect of the invention there is provided for an aircraft turbine type power plant, an acceleration mode that is characterized as being extremely rapid, easy to adapt to existing controls and compatible with steady-state controls having fan or engine pressure ratio and burner pressure limits.

According to another aspect of the invention there is provided a closed loop acceleration control that simulates a compressor stall limit by generating a limiting ratio of burner pressure and other engine pressure as a function of corrected high pressure compressor rotor speed and closing the loop on actual burner pressure by controlling fuel flow to the burner.

According to a still further aspect of the invention there is provided an acceleration control that can be implemented electronically, either by analog or digital controls, while utilizing current state-of-the-art technology including the use of existing sensed parameters and control systems.

According to a further aspect of the invention there is provided an improved correlation schedule for a gas turbine power plant that utilizes P_{B}/P₆ or similar control parameter as the control parameter for engine acceleration by including control logic to compensate for variations in fan duct losses. The P_{B}/P₆ ratio includes a pressure indicative of burner pressule and a pressure which correlates with compressor inlet pressure ( in this case, augmentor inlet pressure P6).

According to another further aspect of the invention there is provided compensation for fan duct pressure loss by generating baseline that is a function of corrected low pressure compressor rotor speed and engine pressure ratio (EPR) and calculating the error (Δ EPR) between this value and measured EPR to provide correction for the burner pressure to other engine operating pressure ratio limit used for acceleration control.

According to still a further aspect of the invention the stall margin can be scheduled during engine acceleration to a close proximity of the limiting stall characteristics of the high pressure compressor by closing the loop on a burner pressure limit value that is a function of corrected high pressure compressor speed. The stall margin schedule is independent of compressor bleeds, power extraction and engine degradation.

The foregoing and other features and advantages of the present invention will become more apparent from the following description and accompanying drawings, wherein:
Figure 1 is a schematic illustration of a twin spool, axial flow gas turbine fan jet engine with augmentor including a block diagram of an acceleration control embodiment of this invention;
Figure 2 is a schematic illustration, similar to that of Figure 1, of a twin spool, axial flow gas turbine fan jet engine with augmentor including a block diagram of an acceleration control; and
Figure 3 is a schematic identical to Figure 1 with the compensation logic compensating for duct losses.

While, in its preferred embodiment this invention is intended for utilization on a twin spool, axial flow gas turbine fan-jet military type engine, it will be appreciated that it has utility in other types of engines, such as straight jets and engines used in nonmilitary applications. The invention is described herein as being implemented electronically as shown in its analog logic form. It is to be understood that it is intended for use in an all electronic digital type control, such as the controls used on the F-100 family of engines known by the acronym of DEEC (Digital Electronic Engine Control) and the controls planned for use on the F119 family of advanced engines known by the acronym of FADEC (Full Authority Digital Electronic Control) which are incorporated herein by reference. The F100 family of military engines is manufactured by Pratt & Whitney Aircraft, a division of United Technologies Corporation, the assignee of this patent application, and the F119 is currently being developed for future military applications.

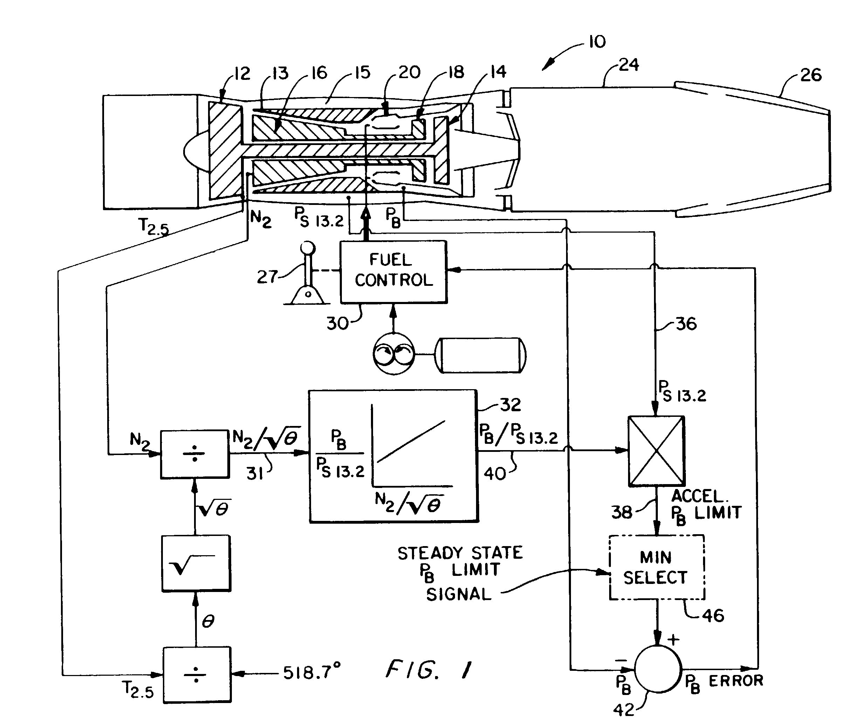

The twin spool, axial flow fan jet engine illustrated by the reference numeral 10 is shown in a simplified form in Figure 1 as comprising a low pressure spool having a fan/ low pressure compressor section 12 driven by a low pressure turbine section 14 and a high pressure spool comprising a high pressure compressor section 16 driven by the high pressure turbine section 18. An annular burner 20 is fed fuel that combusts with the pressurized air admitted to the burner to generate hot gases to power the turbines. Air discharging from the fan 12 is split by splitter 13 so that a portion enters the core engine and a portion is bypassed through bypass duct 15 to mix with the core discharge gas.

As is apparent from the foregoing, the combustion gases discharging from the turbine (core engine) together with the fan discharge air are eventually discharged through an exhaust nozzle imparting thrust to the engine. In many military applications and some other applications as well, an augmentor is employed as is disclosed in this preferred embodiment. The augmentor 24, as the name emphasizes, adds additional thrust to the engine by burning fuel in a secondary combustor section. In this instance, the augmentor includes suitable fuel nozzles, a flame holder and the exhaust nozzle 26. The exhaust nozzle 26 is variable to assure that the proper engine thermodynamic cycle is maintained in both augmented and nonaugmented operation. In aircraft applications, it is typical to extract power from the engine for purposes other than generating thrust and bleed air from the compressor.

As is customary, the fuel supplied to the burner is regulated by the fuel control to assure that the proper amount of fuel is delivered to automatically maintain optimum, or nearly so, engine operation for both steady-state and transient conditions for given power lever 27 positions. Hence, a suitable fuel control represented by reference number 30 is shown by the box and may be any available state-of-the-art control which may be executed electronically, mechanically, hydraulically, hydro-mechanically or the combination thereof. Suffice it to say, that these current state-of-the-art controls typically sense speeds, temperatures and pressures which mechanisms can be utilized with this invention.

As is best shown schematically in Figure 1, the acceleration control of this invention generates a corrected speed signal (N₂/√θ). The correction is obtained by referencing a compressor inlet temperature (T_{2.5}) (the subscript 2.5 references a particular station designation in the engine, which designation can vary with different engine families and models) to the sea level temperature value 228.17°K (518.7° Rankine) by straightforward computations. The compressor inlet temperature used in this calculation can be a sensed value or calculated from other sensed values. This produces a signal in line 31 indicative of N₂/√θ which is applied as the input to the function generator 32. The function generator 32 produces a limit signal designated as the parameter (P_{B}/PS_{13.2}) where the subscript 13.2 is indicative of some station downstream of the fan, and in the preferred embodiment this value is indicative of the pressure in the fan bypass duct prior to the inlet of the augmentor (line 36 ). Of course, other pressures (P2.5,P16, P6, etc.) may be equally valid and substituted therefor as one skilled in this art will appreciate. The value of P_{B}/PS_{13.2} serves to approximate the pressure ratio across the high pressure compressor 16. As shown by actual test data, there is an excellent correlation between these two ratio values (the ratio of P_{B}/PS_{13.2} and pressure ratio of the high pressure compressor) since the fan bypass duct pressure (line 36) is directly linked to inlet pressure of the high pressure compressor 16 via the fan bypass duct 15. Also, it is well-known that burner pressure is almost equal to high compressor discharge pressure.

It is apparent from the foregoing that by utilizing this correlation noted above and as shown in Figure 1, the output of function generator 32 defines the P_{B}/PS_{13.2} limit schedule. Since the high pressure compressor stall limit is plotted as a function of corrected rotor speed N₂/√θ, stall margin can be selected to account for engine-to-engine variations in high compressor stall limits and inlet distortions. Also, since the P_{B}/PS_{13.2} limit is combined with measured fan bypass duct pressure (line 36) the parameter establishes a P_{B} limit for engine acceleration. The P_{B} limit signal in line 38 is the product of the output of function generator 32 in line 40 (P_{B}/PS_{13.2}) and PS_{13.2} (line 36) which is the fan bypass duct pressure. Hence, the P_{B} limit is independent of the power extraction, compressor bleed and engine degradation and the stall margin need not be established to account for those conditions.

The comparator 42 compares the P_{B} limit signal and actual P_{B} to produce an error signal that serves to close the loop on P_{B} by varying fuel flow through the fuel control.

A minimum select gate 46 may be utilized if it is desired to select between the steady-state burner pressure limit manifested by the fuel control 30 and the P_{B} limit signal manifested by the present invention. This option would be predicated on the particular application to which this invention is used.

The logic disclosed in Figure 1 can be used as a trim (or "topper") for control schemes using an Ṅ₂ acceleration mode. When used as a "topper", the very repeatable transient times possible with Ṅ₂ could be assured without risk of stall when engine conditions or power extraction would not permit nominal Ṅ₂ acceleration rate. However, use of the PB/PS_{13.2} acceleration mode alone would always provide the fastest transient possible.

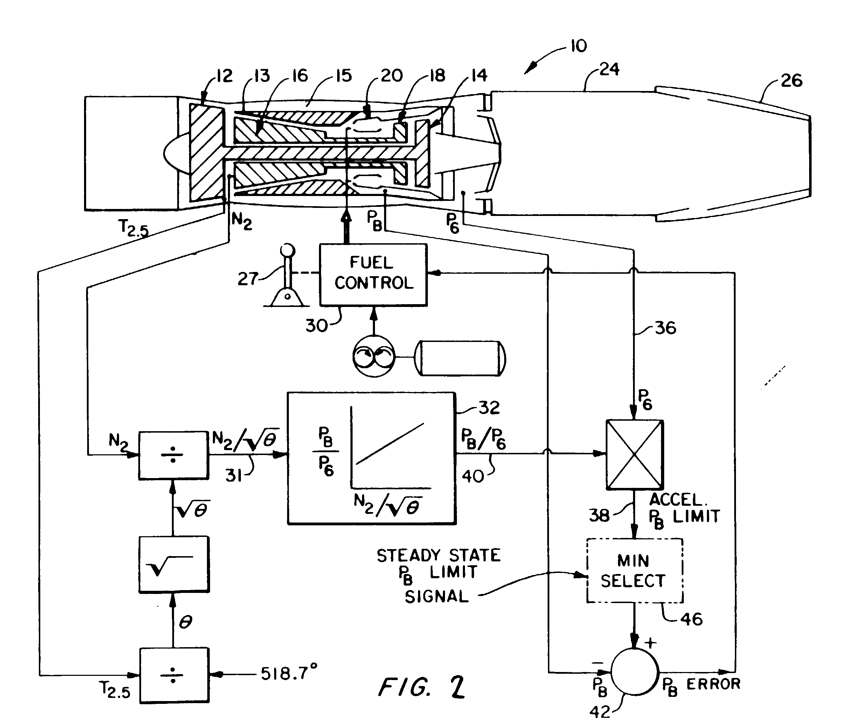

A further twin spool, axial flow fan jet engine illustrated by the reference numeral 10 is shown in a simplified form in Figure 2 (in which like reference numerals refer to like parts in both Figs. 1 and 2) as comprising a low pressure spool having a fan/low pressure compressor section 12 driven by a low pressure turbine section 14 and a high pressure spool comprising a high pressure compressor section 16 driven by the high pressure turbine section 18. An annular burner 20 is fed fuel that combusts with the pressurized air admitted to the burner to generate hot gases to power the turbines. Air discharging from the fan 12 is split by splitter 13 so that a portion enters the core engine and a portion is bypassed through bypass duct 15 to mix with the core discharge gas.

As is apparent from the foregoing, the combustion gases discharging from the turbine (core engine) together with the fan discharge air are eventually discharged through an exhaust nozzle imparting thrust to the engine. In many military applications and some other applications as well, an augmentor is employed as is disclosed in this preferred embodiment. The augmentor 24, as the name emphasizes, adds additional thrust to the engine by burning fuel in a secondary combustor section. In this instance, the augmentor includes suitable fuel nozzles, a flame holder and the exhaust nozzle 26. The exhaust nozzle 26 is variable to assure that the proper engine thermodynamic cycle is maintained in both augmented and nonaugmented operation. In aircraft applications, it is typical to extract power from the engine for purposes other than generating thrust and bleed air from the compressor.

As is customary, the fuel supplied to the burner is regulated by the fuel control to assure that the proper amount of fuel is delivered to automatically maintain optimum, or nearly so, engine operation for both steady-state and transient conditions for given power lever 27 positions. Hence, a suitable fuel control represented by reference number 30 is shown by the box and may be any available state-of-the-art control which may be executed electronically, mechanically, hydraulically, hydro-mechanically or the combination thereof. Suffice it to say, that these current state-of-the-art controls typically sense speeds, temperatures and pressures which mechanisms can be utilized with this invention.

As best shown schematically in Figure 2, the acceleration control of this invention generates a corrected speed signal (N₂/√θ). The correction is obtained by referencing compressor inlet temperature (T_{2.5}) (the subscript 2.5 references a particular station designation in the engine, which designation can vary with different engine families and models) to the sea level temperature value 228.17°K (518.7° Rankine) by straightforward computations. The compressor inlet temperature used in this calculation can be a sensed value or calculated from other sensed values. This produces a signal in line 31 indicative of N₂/√θ which is applied as the input to the function generator 32. The function generator 32 produces a limit signal designated as the parameter (P_{B}/P₆) where the subscript 6 is indicative of some station downstream of the fan, and in the embodiment which benefits most from compensation for fan op-line variations, this value is indicative of the pressure at the inlet of the augmentor (line 36). Of course, other pressures may be equally valid and substituted therefor as one skilled in this art will appreciate. The value of P_{B}/P₆ serves to approximate the pressure ratio across the high pressure compressor 16. As shown by actual test data, there is an excellent correlation between these two ratio values (the P_{B}/P₆ ratio and pressure ratio of the high pressure compressor) since augmentor inlet pressure (line 36) is directly linked to inlet pressure of the high pressure compressor 16 via the fan bypass duct 15. Also, it is well-known that burner pressure is almost equal to high compressor discharge pressure.

It is apparent from the foregoing that by utilizing this correlation noted above and as shown in Figure 2, the output of function generator 32 defines the P_{B}/P₆ limit schedule. Since the high pressure compressor stall limit is plotted as a function of corrected rotor speed (N₂/√θ), stall margin can be selected to account for engine-to-engine variations in high compressor stall limits and inlet distortions. Also, since the P_{B}/P₆ limit is combined with measured augmentor inlet pressure (line 36) the parameter establishes a P_{B} limit for engine acceleration. The P_{B} limit signal in line 38 is the product of the output of function generator 32 in line 40 (P_{B}/P₆) and P₆ (line 36) which is the augmentor inlet pressure. Hence, the P_{B} limit is independent of the power extraction, compressor bleed and engine degradation and the stall margin need not be established to account for those conditions.

The comparator 42 compares the P_{B} limit signal and actual P_{B} to produce an error signal that serves to close the loop on P_{B} by varying fuel flow through the fuel control.

A minimum select gate 46 may be utilized if it is desired to select between the steady-state burner pressure limit manifested by the fuel control 30 and the P_{B} limit signal manifested by the present invention. This option would be predicated on the particular application to which this invention is used.

Since the limiting high pressure compressor pressure ratio is calculated using the P_{B}/P₆ correlation, which is a function of duct pressure loss, variations in the fan op-line will alter this correlation. In applications where this effect adversely impacts this correlation, the compensation logic of this invention can be employed to produce a P_{B} limit schedule that will accurately reflect the surge characteristics of the high pressure compressor.

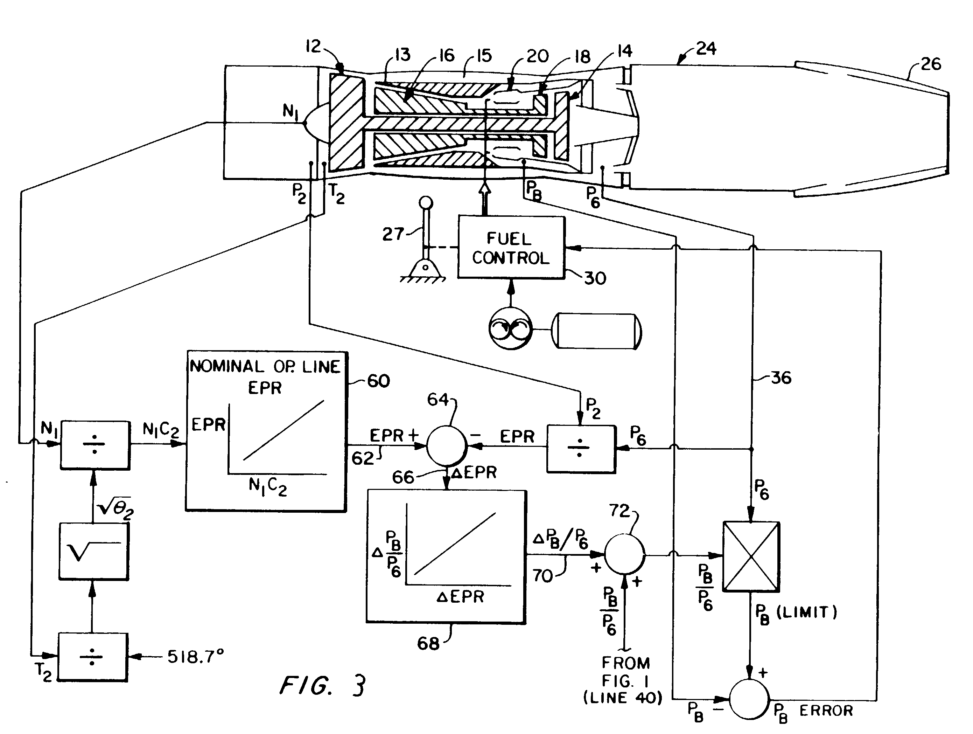

This can best be seen by referring to Figure 3 that schematically shows the compensation logic that can be implemented in the circuitry disclosed in Figure 2. The like reference numerals refer to like parts in both Figure 2 and Figure 3.

As noted in Figure 3, the compensation logic uses corrected low pressure compressor speed (N₁C₂) and EPR characteristics for a nominal op-line as a baseline and assesses the variation in operating EPR relative to this nominal op-line. The ΔEPR is correlated with the change in duct pressure loss it creates to compensate for fan op-line variation when calculating the limiting P_{B}/P₆ pressure ratio parameter. The input to function generator 60 is a corrected speed value (N₁C₂) calculated by referencing the engine inlet temperature (T₂) to the standard sea level temperature in degrees Rankine and calculating its square root value. This value in turn is divided into the measured speed of the low pressure compressor 12.

The function generator 60 serves to produce an output signal in line 62 indicative of the EPR for a nominal op-line. A comparator 64 compares the actual EPR which is the ratio of P₆ to P₂ to the output signal of line 62 to produce an error signal. The error signal in line 66 is ΔEPR and is the input of function generator 68 which produces an output signal in line 70 indicative of the needed change in P_{B}/P₆ to compensate for operation at fan op-lines other than the nominal (Δ P_{B}/P₆). This ΔP_{B}/P₆ value is then added by summer 72 to the P_{B}/P₆ limit signal manifested in line 40 of Figure 1. This compensation logic allows a single correlation of high pressure compressor pressure ratio and P_{B}/P₆ to be used over a wide range of fan op-lines.

The logic disclosed in Figure 2 and Figure 3 can be used as a trim (or "topper") for control schemes using an Ṅ₂ acceleration mode. When used as a "topper", the very repeatable transient times possible with Ṅ₂ could be assured without risk of stall when engine conditions or power extraction would not permit nominal Ṅ₂ acceleration rate. However, use of the P_{B}/P₆ acceleration mode alone would always provide the fastest transient possible.

Although this invention has been shown and described with respect to detailed embodiments thereof, it will be understood by those skilled in the art that various changes in form and detail thereof may be made without departing from the scope of the claimed invention as defined in the claims.

## Claims

1. An acceleration control for a gas turbine engine (10) for controlling the acceleration mode of said engine (10), said engine (10) having a compressor (16) subject to stall, a burner (20) for generating engine working fluid medium, a turbine (18) powered by said engine working fluid medium for driving said compressor (16), fuel control means (30) responsive to engine operating parameters (27, N₂,T_{2.5}, P_{B}) for controlling the flow of fuel to said burner (20), said acceleration control being characterized by means (31,32,36,38,42) for establishing a stall margin for said compressor (16) including means (N₂,32) responsive to compressor rotor speed (N₂) for establishing a first signal (40) simulating a compressor stall limit indicative of the ratio of the pressure of said burner (30) and the pressure at another station (P₆;P_{13.2}) in said engine (10), said first signal (40) being multiplied by the actual pressure of said another station (P₆), means (P_{B}) responsive to actual burner pressure for generating a second signal, and means (42) responsive to said first signal and said second signal for adjusting said fuel control means (30) to limit the flow of fuel to said burner (10) wherein said stall margin is independent of compressor bleed, power extraction from said engine and degradation of engine efficiency.

2. An acceleration control as claimed in claim 1, wherein said engine (10) includes a fan (12), a fan bypass duct (15) for flowing fan discharge air and an augmentor (24), said other station being in said bypass duct.

3. An acceleration control as claimed in claim 2 including means (36) responsive to the actual pressure in said bypass duct (15) to produce a third signal, and multiplying means (38) for multiplying said first signal and said third signal for producing a fourth signal indicative of a limiting value of the pressure in said burner and means responsive to the error between said fourth signal and actual burner pressure for further controlling said fuel control means (30).

4. An acceleration control as claimed in claim 3, wherein said first signal is responsive to compressor speed (N₂) corrected to a base line value indicative of a temperature at the inlet of said compressor (16) of 288.17°K (518.7 degrees Rankine).

5. An acceleration control as claimed in claim 4, wherein said fuel control means (30) establishes a steady-state signal limiting the value of the pressure in said burner (20) and a minimum select means (46) for selecting the minimum value between said steady-state signal and said fourth signal for controlling said error responsive means (42).

6. An acceleration control as claimed in claim 1, wherein said engine (10) includes a fan (12), a fan bypass duct (15) for flowing fan discharge air and an augmentor (24), said other station being in said inlet of said augmentor.

7. An acceleration control as claimed in claim 6, including means (36) responsive to the actual pressure in said inlet of said augmentor (24) to produce a fourth signal, and multiplying means (38) for multiplying said first signal and said fourth signal for producing a fifth signal indicative of a limiting value of the pressure in said burner (20) and means responsive to the error between said fifth signal and actual burner pressure for further controlling said fuel control means (30).

8. An acceleration control as claimed in claim 7, wherein said first signal is responsive to compressor speed corrected to a baseline value indicative of a temperature at the inlet of said engine of 288.17°K (518.7° Rankine).

9. An acceleration control as claimed in claim 8, wherein said fuel control means (30) establishes a steady-state signal limiting the value of the pressure in said burner (20) and a minimum select means (46) for selecting the minimum value between said steady state signal and said fifth signal for controlling said error responsive means.

10. An acceleration control as claimed in anyone of the preceding claims, in combination with means (60,64,68,72) for compensation for bypass duct pressure losses including a function generator (60) for generating an engine pressure ratio signal as a function of corrected low pressure compressor rotor speed, means (64) for calculating the difference between the generated engine pressure ratio and the actual engine pressure ratio modifying (72) said first signal.

## Patentansprüche

1. Beschleunigungsregler für ein Gasturbinentriebwerk (10) zum Regeln der Beschleunigungsbetriebsart des Triebwerks (10), wobei das Triebwerk einen Verdichter (16) hat, bei dem Strömungsabriß auftreten kann, einen Brenner (20) zum Erzeugen von Triebwerksarbeitsfluidmedium, eine Turbine (18), die durch das Triebwerksarbeitsfluidmedium angetrieben wird, zum Antreiben des Verdichters (16), eine Brennstoffregeleinrichtung (30), die auf Triebwerksbetriebsparameter (27, N₂, T_{2,5}, P_{B}) anspricht, zum Regeln der Brennstoffzufuhr zu dem Brenner (20), wobei der Beschleunigungsregler gekennzeichnet ist durch Einrichtungen (31, 32, 36, 38, 42) zum Festlegen eines Strömungsabrißabstands für den Verdichter (16), mit einer Einrichtung (N₂, 32), die auf die Verdichterrotordrehzahl (N₂) anspricht, um ein erstes Signal (40) festzulegen, das einen Verdichterströmungsabrißgrenzwert simuliert, der das Verhältnis des Druckes des Brenners (30) und des Druckes in einer weiteren Station (P_{6;} P_{13,2}) in dem Triebwerk (10) angibt, wobei das erste Signal (40) mit dem Istdruck der weiteren Station (P₆) multipliziert wird, einer Einrichtung (P_{B}), die auf den Istbrennerdruck anspricht, um ein zweites Signal zu erzeugen, und einer Einrichtung (42), die auf das erste Signal und auf das zweite Signal anspricht, um die Brennstoffregeleinrichtung (30) einzustellen und die Brennstoffzufuhr zu dem Brenner (10) zu begrenzen, wobei der Strömungsabrißabstand unabhängig von einer Verdichteranzapfung, einer Leistungsentnahme aus dem Triebwerk und einer Verschlechterung des Triebwerkswirkungsgrads ist.

2. Beschleunigungsregler nach Anspruch 1, wobei das Triebwerk (10) einen Fan (12), einen Mantelstromkanal (15) zum Leiten von Fanauslaßluft und einen Schubverstärker (24) hat, wobei sich die andere Station in dem Mantelstromkanal befindet.

3. Beschleunigungsregler nach Anspruch 2, mit einer Einrichtung (36), die auf den Istdruck in dem Mantelstromkanal (15) anspricht, um ein drittes Signal zu erzeugen, und einer Multipliziereinrichtung (38) zum Multiplizieren des ersten Signals und des dritten Signals, um ein viertes Signal zu erzeugen, das einen begrenzenden Wert des Druckes in dem Brenner anzeigt, und einer Einrichtung, die auf den Fehler zwischen dem vierten Signal und dem Istbrennerdruck anspricht, um die Brennstoffregeleinrichtung (30) weiter zu steuern.

4. Beschleunigungsregler nach Anspruch 3, wobei das erste Signal auf der Verdichterdrehzahl (N₂), korrigiert auf einen Grundlinienwert, beruht, der eine Temperatur an dem Einlaß des Verdichters (16) von 288,17°K (518.7 Grad Rankine) angibt.

5. Beschleunigungsregler nach Anspruch 4, wobei die Brennstoffregeleinrichtung (30) ein stationäres Signal festlegt, welches den Wert des Druckes in dem Brenner (20) begrenzt, und mit einer Minimumwähleinrichtung (46) zum Auswählen des Minimalwertes zwischen dem stationären Signal und dem vierten Signal, um die auf den Fehler ansprechende Einrichtung (42) zu steuern.

6. Beschleunigungsregler nach Anspruch 1, wobei das Triebwerk (10) einen Fan (12) aufweist, einen Mantelstromkanal (15) zum Leiten von Fanauslaßluft und einen Schubverstärker (24), wobei sich die andere Station in dem Einlaß des Schubverstärkers befindet.

7. Beschleunigungsregler nach Anspruch 6, mit einer Einrichtung (36), die auf den Istdruck in dem Einlaß des Schubverstärkers (24) anspricht, um ein viertes Signal zu erzeugen, und mit einer Multipliziereinrichtung (38) zum Multiplizieren des ersten Signals und des vierten Signals, um ein fünftes Signal zu erzeugen, welches einen begrenzenden Wert des Druckes in dem Brenner (20) angibt, und einer Einrichtung, die auf den Fehler zwischen dem fünften Signal und dem Istbrennerdruck anspricht, zum weiteren Steuern der Brennstoffregeleinrichtung (30).

8. Beschleunigungsregler nach Anspruch 7, wobei das erste Signal auf der Verdichterdrehzahl beruht, korrigiert auf einen Grundlinienwert, der eine Temperatur an dem Einlaß des Triebwerks von 288,17 °K (518.7 Grad Rankine) angibt.

9. Beschleunigungsregler nach Anspruch 8, wobei die Brennstoffregeleinrichtung (30) ein stationäres Signal festlegt, welches den Wert des Druckes in dem Brenner (20) begrenzt, und wobei eine Minimumwähleinrichtung (46) vorgesehen ist zum Auswählen des Minimalwertes zwischen dem stationären Signal und dem fünften Signal zum Steuern der auf den Fehler ansprechenden Einrichtung.

10. Beschleunigungsregler nach einem der vorhergehenden Ansprüche, in Kombination mit Einrichtungen (60, 64, 68, 72) zur Kompensation von Mantelstromkanaldruckverlusten, die einen Funktionsgenerator (60) zum Erzeugen eines Triebwerksdruckverhältnissignals als eine Funktion der korrigierten Niederdruckverdichterrotordrehzahl und eine Einrichtung (64) zum Berechnen der Differenz zwischen dem erzeugten Triebwerksdruckverhältnis und dem Isttriebwerksdruckverhältnis, die das erste Signal modifiziert (72), umfassen.

## Revendications

1. Commande d'accélération pour un turbomoteur (10) destinée à commander le mode d'accélération de ce moteur (10), ce moteur (10) comportant un compresseur (16) susceptible d'être soumis à un décrochage, un brûleur (20) pour produire un fluide de travail du moteur, une turbine (18) entraînée par le fluide de travail du moteur afin d'entraîner le compresseur (16), un moyen de commande de carburant (30) répondant à des paramètres de fonctionnement du moteur (27,N₂,T_{2.5},P_{B}) en commandant le débit de carburant vers le brûleur (20), cette commande d'accélération étant caractérisée par des moyens (31,32,36,38,42) pour établir une marge de décrochage pour le compresseur (16)_{,} comportant un moyen (N₂,32) répondant à la vitesse (N₂) du rotor du compresseur en établissant un premier signal (40) simulant une limite de décrochage du compresseur représentative du rapport entre la pression dans le brûleur (30) et la pression en un autre emplacement (P₆;P_{13.2}) dans le moteur (10)_{,} ce premier signal (40) étant multiplié par la pression effective de l'autre emplacement (P₆), un moyen (P_{B}) répondant à la pression effective dans le brûleur en produisant un second signal et un moyen (42) répondant au premier signal et au second signal en ajustant le moyen (30) de commande de carburant afin de limiter le débit de carburant vers le brûleur (10)_{,} si bien que la marge de décrochage est indépendante du soutirage du compresseur, de l'extraction d'énergie à partir du moteur et de la dégradation du rendement du moteur.

2. Commande d'accélération suivant la revendication 1 caractérisée en ce que le moteur (10) comporte une soufflante (12), un conduit (15) de dérivation de la soufflante pour permettre l'écoulement de l'air refoulé par la soufflante et un dispositif de postcombustion (24), l'autre emplacement se trouvant dans le conduit de dérivation.

3. Commande d'accélération suivant la revendication 2 caractérisée en ce qu'elle comporte un moyen (36) répondant à la pression effective dans le conduit de dérivation (15) en produisant un troisième signal et un moyen de multiplication (38) pour multiplier le premier signal et le troisième signal afin de produire un quatrième signal représentatif d'une valeur limite de la pression dans le brûleur, et un moyen répondant à l'erreur entre le quatrième signal et la pression effective dans le brûleur en commandant additionnellement le moyen (30) de commande de carburant.

4. Commande d'accélération suivant la revendication 3 caractérisée en ce que le premier signal répond à la vitesse (N₂) du compresseur corrigée par rapport à une valeur d'une caractéristique de base représentative d'une température à l'entrée du compresseur (16) égale à 288,17°K (518,7 degrés Rankine).

5. Commande d'accélération suivant la revendication 4 caractérisée en ce que le moyen (30) de commande de carburant établit un signal de régime permanent limitant la valeur de la pression dans le brûleur (20) et un moyen (46) de sélection d'un minimum sélectionne la valeur minimale entre le signal de régime permanent et le quatrième signal afin de commander le moyen (42) répondant au signal d'erreur.

6. Commande d'accélération suivant la revendication 1 caractérisée en ce que le moteur (10) comporte une soufflante (12), un conduit (15) de dérivation de la soufflante pour permettre l'écoulement de l'air refoulé par la soufflante et un dispositif de postcombustion (24), l'autre emplacement se trouvant dans l'orifice d'entrée du dispositif de postcombustion.

7. Commande d'accélération suivant la revendication 6 caractérisée en ce qu'elle comporte un moyen (36) répondant à la pression effective dans l'entrée du dispositif de postcombustion (24) en produisant un quatrième signal et un moyen de multiplication (38) pour multiplier le premier signal et le quatrième signal afin de produire un cinquième signal représentatif d'une valeur limite de la pression dans le brûleur (20), et un moyen répondant à l'erreur entre le cinquième signal et la pression effective dans le brûleur en commandant additionnellement le moyen (30) de commande de carburant.

8. Commande d'accélération suivant la revendication 7 caractérisée en ce que le premier signal répond à la vitesse du compresseur corrigée par rapport à une valeur d'une caractéristique de base représentative d'une température à l'entrée du compresseur (16) égale à 288,17°K (518,7 degrés Rankine).

9. Commande d'accélération suivant la revendication 8 caractérisée en ce que le moyen (30) de commande de carburant établit un signal de régime permanent limitant la valeur de la pression dans le brûleur (20) et un moyen (46) de sélection d'un minimum sélectionne la valeur minimale entre le signal de régime permanent et le cinquième signal afin de commander le moyen répondant au signal d'erreur.

10. Commande d'accélération suivant l'une quelconque des revendications précédentes caractérisée en ce qu'elle est utilisée en combinaison avec des moyens (60,64,68,72) pour une compensation des chutes de pression dans le conduit en dérivation, comportant un générateur de fonction (60) pour produire un signal de rapport des pressions du moteur en tant que fonction de la vitesse corrigée du rotor du compresseur basse pression, et un moyen (64) pour calculer la différence entre le rapport des pressions du moteur produit et le rapport des pressions du moteur effectif modifiant (72) le premier signal.
